# EUROPÄISCHE PATENTSCHRIFT

(11) **EP 1 910 008 B1**
(45) Veröffentlichungstag und Bekanntmachung des Hinweises auf die Patenterteilung: **26.12.2012**
(21) Anmeldenummer: 06776337.5
(22) Anmeldetag: 21.07.2006
(51) Int. Cl.: B23K 1/19, B23K 1/20, B23K 35/00, B23K 35/36

(54) **Gegenstand mit einer zu verlötenden Oberfläche**
Component with a surface to be soldered
Composante avec une surface à souder

(30) Priorität: 27.07.2005 DE 102005035704
(43) Veröffentlichungstag der Anmeldung: 16.04.2008
(73) Patentinhaber: Behr GmbH & Co. KG, 70469 Stuttgart (DE)
(72) Erfinder: BOGER, Snjezana, Boger, 73734 Esslingen (DE); ENGLERT, Peter, 74177 Bad Friedrichshall (DE); GROSS, Dieter, 70176 Stuttgart (DE); PFITZER, Matthias, 73779 Deizisau (DE); TRAUTWEIN, Ingo, 74321 Bietigheim-Bissingen (DE)
(74) Vertreter: Grauel, Andreas
(86) Internationale Anmeldenummer: PCT/EP2006/007190
(87) Internationale Veröffentlichungsnummer: WO 2007/012434

(56) Entgegenhaltungen:
- WO-A-03/076123
- DE-A1- 10 314 700
- DE-A1- 19 515 909
- DE-A1- 19 537 216
- DE-A1- 19 925 301
- E.J. MORLEY, M. SYSLAK: "Zinc brazing of automotive aluminium heat exchangers" SAE TECHNICAL PAPER SERIES, Nr. 930152, 1993, Seiten 1-8, XP001248121

## Beschreibung

Die Erfindung betrifft einen Gegenstand mit einer zu verlötenden Obertläche, insbesondere eines Wärmetauschers, zum Beispiel eines Seitenteils, einer Wellrippe oder eines Rohres eines Wärmetauschers, mit einer Flussmittelschicht

Aus der deutschen Offenlegungsschrift DE 101 41 883 A1 ist ein Verfahren bekannt, bei dem eine Flussmittelschicht und eine Versiegelungsschicht auf ein Rohteil aufgetragen werden. Aus der deutschen Offenlegungsschrift DE 102 10 133 A1 ist ein Flussmittel zum Löten von Aluminium bekannt, dem Zirkoniumfluorid und/oder Titanfluorid zugesetzt ist. Aus der europäischen Patentanmeldung EP 1 142 663 A1 und dem US-Patent US 3,945,899 ist das Aufbringen von Böhmitschichten auf Aluminiumoberflächen bekannt Aus dem US-Patent US 5,518,555 ist ein Obertlächenbehandlungsverfahren auf Basis einer wässrigen Zirkonium-Polyacrylamidlösung sowie den entsprechenden Metallfluoriden bekannt. Aus dem US-Patent US 5,584,946 ist ein Vorbehandlungs- und Oberflächenbehandlungsverfahren auf Basis komplexer Fluoride der Elemente Bor, Zirkon, Hafnium und Titan bekannt. Aus dem US-Patent US 5,692,145 ist ein Oberflächenbehandlungsverfahren auf Basis komplexer Fluoride der Elemente Bor, Zirkon, Hafnium, Titan, Silizium, Germanium, Zinn, in Verbindung mit Polymeren bekannt. Aus dem US-Patent US 5,795,659 ist eine Aluminiumoberfläche mit den Metallen Zirkonium, Hafnium,- Rhenium, Mangan, Titan sowie mit Silikaten und Boraten zum Korrosionsschutz und zum Hochtemperaturkorrosionsschutz bekannt. Aus der internationalen Patentanmeldung WO 00/73014 A1 ist die Aufbringung einer Aluminium-Silizium-Verbindung bekannt. Unter Zugabe von fluoridischen Flussmitteln soll bei der Erhitzung des Bauteils eine Aluminium-Silizium-Lotbildung stattfinden. Aus der deutschen Offenlegungsschrift DE 43 38 361 A1 ist ein Verfahren zur Herstellung von Zusammensetzungen auf der Basis von Epoxidgruppen-haltigen Silanen bekannt. Aus der deutschen Gebrauchsmusterschrift DE 200 18 520 U1 ist ein filterfreier Wärmetauscher mit Nano-Technologie bekannt. Aus der europäischen Patentanmeldung EP 1 154 042 A1 ist ein Verfahren zum Erzeugen einer hydrophilen Oberfläche eines Wärmetauschers bekannt. Aus der deutschen Offenlegungsschrift DE 42 14 719 A1 ist ein Verfahren zur Herstellung feinteiliger Metall- und Keramikpulver bekannt. Aus der deutschen Offenlegungsschrift DE 39 37 740 A1 ist ein Verfahren zur Herstellung von nanokristallinen Pulvern aus Metallen, Legierungen beziehungsweise Keramikwerkstoffen bekannt. Aus der deutschen Patentschrift DE 43 37 336 C1 sind feinteilige Metall-, Legierungs- und Metallverbindungspulver bekannt

Aus dem Artikel "Zinc Brazing of Automotive Aluminium Heat Exchangers" ist bekannt, Wärmetauscher aus Aluminium mit einer dünnen Zinkschicht zu versehen.

Die DE 199 25 301 A1 offenbart Bauteile, die mit einer Aluminium-Silizium-Legierung beschichtet sind.

Aus der WO 031076123 A1 ist es bekannt, ein Flussmittel auf der Basis von Kaliumfluoraluminaten zu verwenden, wobei dem Flussmittel Zirkoniumfluorid und/ oder Titanfluorid zugesetzt ist.

Die DE 103 14 700 A1 offenbart ein Verfahren zur Oberflächenmodifikation von Werkstücken, wobei die Werkstücke mit mindestens einem modifizierten Mittel so in Kontakt gebracht werden, dass eine Oberflächenmodifikation auftritt.

Für die Funktionalität und Effizienz von Wärmetauschern, die auch als Wärmeübertrager bezeichnet werden, sind bestimmte Oberflächeneigenschaften erforderlich. Dazu gehören Eigenschaften wie Korrosionsschutz, Hydrophilie/Wasserablauf, verschmutzungshemmend, biozid beziehungsweise biostatisch oder auch Repellentwirkung auf Mikroorganismen, Geruchsverminderung und so weiter, Beschichtungen, zum Beispiel Lackierungen beziehungsweise Konversionsbehandlungen, zum Beispiel Chromatierung, können erst am fertigen Teil nach dem Löten durchgeführt werden. Entsprechende Kosten sowie ein hoher Ressourcenverbrauch für den Betrieb der zusätzlichen Behandlungsanlagen, zum Beispiel Chromatierungsanlagen, Tauchanlagen und Schleuderanlagen für Lackapplikationen, sowie der Aufwand für Logistik und Handhabung der Werkstücke sind entsprechend hoch anzusetzen.

Aufgabe der Erfindung ist es, einen Gegenstand mit einer zu verlötende Oberfläche, insbesondere eines Wärmetauschers, zum Beispiel eines Seitenteils, einer Wellrippe oder eines Rohres eines Wärmetauschers, mit einer Flussmittelschicht, zu schaffen, der im verlöteten Zustand mindestens eine zusätzliche Eigenschaft, wie Korrosionsschutz, Hydrophilie/Wasserablauf, verschmutzungshemmend, biozid beziehungsweise biostatisch oder auch Repellentwirkung auf Mikroorganismen, Geruchverminderung und so weiter, aufweist und kostengünstig herstellbar ist.

Die Aufgabe ist bei einem Gegenstand mit einer zu verlötenden Oberfläche, insbesondere eines Wärmetauschers, zum Beispiel eines Seitenteils, einer Wellrippe oder eines Rohres eines Wärmetauschers, mit einer Flussmittelschicht, dadurch gelöst, dass die zu verlötende Oberfläche zusätzlich zu der Flussmittelschicht mindestens eine weitere Schicht aufweist, die einen die zu verlötende Oberfläche modifizierenden Zusatz enthält, der beim Verlöten der zu verlötenden Oberfläche umgesetzt wird, um die Oberfläche zu modifizieren, wobei die mindestens eine weitere Schicht Metallsalze enthält. Im Rahmen der vorliegenden Erfindung hat sich herausgestellt, dass die Beigabe von modifizierenden Zusätzen in die Flussmittelschicht nicht immer zu zufrieden stellenden Ergebnissen führt. Durch den modifizierenden Zusatz kann zum Beispiel der Korrosionsschutz verbessert werden. Die Art und die Anordnung der weiteren Schichten erfolgen variabel und kundenspezifisch. Die Modifizierung der erfolgt vorteilhafterweise während des Lötprozesses. Die erfindungsgemäße Oberfläche kann besser an gewünschte Oberfiächenanforderungen angepasst werden als herkömmliche Fertigprodukte. Durch das Aufbringen einer oder vorzugsweise mehrerer weiterer Schichten können die gewünschten Oberflächeneffekte gezielt gesteuert und eingestellt werden. Die Flussmittelschicht umfasst vorzugsweise ein preiswertes Standard- Flussmittel ohne Zusätze.

Erfindungsgemäß ist der Gegenstand dadurch gekennzeichnet, dass die mindestens eine weitere Schicht Metallsalze enthält. Dabei handelt es sich vorzugsweise um Salze der Übergangsmetalle/Hauptgruppenelemente des Periodensystems der Elemente.

Die vorab angegebene Aufgabe ist bei einem Gegenstand mit einer zu verlötenden Oberfläche, insbesondere eines Wärmetauschers, zum Beispiel eines Seitenteils, einer Wellrippe oder eines Rohres eines Wärmetauschers, mit einer Flussmittelschlcht, auch dadurch gelöst, dass die Flussmittelschicht als Bindemittel mindestens eine metallorganische Verbindung enthält, die beim Verlöten der zu verlötenden Oberfläche umgesetzt wird, um die Oberfläche zu modifizieren. Die Verwendung von metallorganischen Verbindungen als Bindemittel liefert den Vorteil, dass das Bindemittel gleichzeitig dazu verwendet werden kann, die zu verlötende Oberfläche beim Löten zu modifizieren.

Ein bevorzugtes Ausführungsbeispiel des Gegenstands mit einer zu verlötenden Oberfläche ist dadurch gekennzeichnet, dass die Flussmittelschicht elementares Silizium oder Siliziumverbindungen enthält. Während des Lötprozesses kann das Silizium in den Grundwerkstoff der zu verlötenden Oberfläche diffundieren und das Lot ausbilden.

Ein weiteres bevorzugtes Ausführungsbeispiel des Gegenstands mit einer zu verlötenden Oberfläche ist dadurch gekennzeichnet, dass die zu verlötende Oberfläche eine Lotschicht aufweist. Die zu verlötende Oberfläche kann zum Beispiel mit Lot plattiert sein.

Ein weiteres bevorzugtes Ausführungsbeispiel des Gegenstands mit einer zu verlötenden Oberfläche ist dadurch gekennzeichnet, dass die mindestens eine weitere Schicht elementares Silizium oder Siliziumverbindungen enthält. Während des Lötprozesses diffundiert das Silizium aus der weiteren Schicht in den Grundwerkstoff der zu verlötenden Oberfläche und bildet das Lot aus.

Weitere bevorzugte Ausführungsbeispiele des Gegenstands mit einer zu verlötenden Oberfläche sind dadurch gekennzeichnet, dass die mindestens eine weitere Schicht oberhalb und/oder unterhalb der Flussmittelschicht angeordnet ist. In Abhängigkeit der in den Schichten enthaltenen Verbindungen kann die Anzahl und die Anordnung der Schichten an die gewünschten Eigenschaften angepasst werden.

Ein weiteres bevorzugtes Ausführungsbeispiel des Gegenstands mit einer zu verlötenden Oberfläche ist dadurch gekennzeichnet, dass die mindestens eine weitere Schicht Silikonharze enthält. Vorzugsweise sind in der weiteren Schicht zusätzlich zu den Silikonharzen Additive enthalten.

Weitere bevorzugte Ausführungsbeispiele des Gegenstands mit einer zu verlötenden Oberfläche sind dadurch gekennzeichnet, dass die mindestens eine weitere Schicht Metallsalze der Elemente der Nebengruppen III-VI und/oder Metallsalze der Elemente der Hauptgruppe II des Periodensystems der Elemente enthält.

Ein weiteres bevorzugtes Ausführungsbeispiel des Gegenstands mit einer zu verlötenden Oberfläche ist dadurch gekennzeichnet, dass die mindestens eine weitere Schicht metallorganische Verbindungen enthält. Die metallorganischen Verbindungen werden beim Verlöten der zu verlötenden Oberfläche umgesetzt, um die Oberfläche zu modifizieren.

Ein weiteres bevorzugtes Ausführungsbeispiel des Gegenstands mit einer zu verlötenden Oberfläche ist dadurch gekennzeichnet, dass die mindestens eine weitere Schicht metallorganische Verbindungen auf Titanium-, Zirkonium- und/oder Siliziumbasis enthält. Dabei handelt es sich zum Beispiel um Tetra-n-Propoxysilan, Zirkonium-n-Propoxid und Titanium-n-Propoxid.

Ein weiteres bevorzugtes Ausführungsbeispiel des Gegenstands mit einer zu verlötenden Oberfläche ist dadurch gekennzeichnet, dass die mindestens eine weitere Schicht Nanopartikel enthält. Vorzugsweise liegen die Nanopartikel in Dispersion vor.

Ein weiteres bevorzugtes Ausführungsbeispiel des Gegenstands mit einer zu verlötenden Oberfläche ist dadurch gekennzeichnet, dass die Nanopartikel Oxide, Oxidhydrate, Nitride und/oder Carbide umfassen. Während des Lötprozesses werden vorzugsweise Metall-Nano-Verbindungen teilweise reduziert und in Metalle umgewandelt.

Ein weiteres bevorzugtes Ausführungsbeispiel des Gegenstands mit einer zu verlötenden Oberfläche ist dadurch gekennzeichnet, dass die Nanopartikel Oxide, Oxidhydrate, Nitride und/oder Carbide von Hauptgruppenelementen des Periodensystems, wie zum Beispiel Aluminium, Silizium, Indium, Bor und/oder Übergangsmetalle vorzugsweise der IV und V Nebengruppe und/oder Cer und/oder Zink und/oder metallische Nanopartikel, zum Beispiel aus Silizium, Aluminium, Zirkon, Titan, und/oder beschichtete Nanopartikel und/oder aufgepfropfte Nanopartikel vorgenannter Stoffe oder Verbindungen, umfassen.

Ein weiteres bevorzugtes Ausführungsbeispiel des Gegenstands mit einer zu verlötenden Oberfläche ist dadurch gekennzeichnet, dass die Nanopartikel eine Größe zwischen 1 und 1000 nm aufweisen. Diese Größe hat sich im Rahmen der vorliegenden Erfindung als besonders vorteilhaft erwiesen.

Ein weiteres bevorzugtes Ausführungsbeispiel des Gegenstands mit einer zu verlötenden Oberfläche ist dadurch gekennzeichnet, dass die mindestens eine weitere Schicht Sol enthält. Ein Sol ist ein in einem Dispersionsmittel kollodial verteilter Stoff, dessen Teilchen frei beweglich sind.

Ein weiteres bevorzugtes Ausführungsbeispiel des Gegenstands mit einer zu verlötenden Oberfläche ist dadurch gekennzeichnet, dass das Sol beziehungsweise die Sole Nanopartikel und/oder Metallsalze enthält beziehungsweise enthalten. Bei den Nanopartikeln und Metallsalzen handelt es sich vorzugsweise um die vorab beschriebenen Nanopartikel und Metallsalze.

Ein weiteres bevorzugtes Ausführungsbeispiel des Gegenstands mit einer zu verlötenden Oberfläche ist dadurch gekennzeichnet, dass die zu verlötende Oberfläche als Grundwerkstoff Aluminium oder Aluminiumlegierungen enthält. Zum Löten von Aluminium und Aluminiumlegierungen ist es erforderlich, dass eine sich bildende Aluminiumoxidschicht vor dem Löten zumindest teilweise entfernt wird. Dazu wird zum Beispiel ein Flussmittel verwendet.

Die Erfindung betrifft auch einen Gegenstand mit einer zu verlötenden Oberfläche, insbesondere einen Wärmetauscher, zum Beispiel ein Seitenteil, eine Wellrippe oder ein Rohr eines Wärmetauschers, mit einer vorab beschriebenen zu verlötenden Oberfläche. Je nach Bedarf können unterschiedliche Teile unterschiedliche Oberflächen mit unterschiedlich ausgebildeten und/oder angeordneten weiteren Schichten aufweisen.

Erfindungsgemäß ist der Gegenstand dadurch gekennzeichnet, dass die verlötete Oberfläche eine semikeramische Oxidschicht enthält. Die semikeramische Oxidschicht wiederum umfasst zum Beispiel Siliziumdioxid, Zirkondioxid oder Titandioxid (passiver Korrosionsschutz) und/oder Mischverbindungen mit dem Flussmittel und/oder Nitride beim Löten in Schutzgasatmosphäre.

Die Erfindung betrifft auch einen Gegenstand, insbesondere einen Wärmetauscher, zum Beispiel ein Seitenteil, eine Wellrippe oder ein Rohr eines Wärmetauschers, mit einer vorab beschriebenen verlöteten Oberfläche. Beim Verlöten der zu verlötenden Oberfläche wurde der modifizierende Zusatz der weiteren Schicht umgesetzt.

Ein weiteres bevorzugtes Ausführungsbeispiel des Gegenstandes ist dadurch gekennzeichnet, dass die verlötete Oberfläche eine kathodisch wirksame Oberflächenschicht aufweist. Dadurch wird ein kathodischer Schutz der Oberfläche gewährleistet.

Die Erfindung betrifft auch ein Verfahren zum Herstellen eines vorab beschriebenen Gegenstandes, das dadurch gekennzeichnet ist, dass die mindestens eine weitere Schicht mit dem modifizierenden Zusatz während des Lötprozesses umgesetzt wird. Die erfindungsgemäße Oberfläche, der erfindungsgemäße Gegenstand und das erfindungsgemäße Verfahren liefern unter anderem die folgenden Vorteile: Senkung der Herstellkosten für Wärmetauscher durch Einsparung von Nachbehandlungs- und Logistikkosten; Energieeinsparung und Resourcenschonung durch einen einstufigen Fertigungsprozess; Vermeidung des Einsatzes von aggressiven Chemikalien zur Oberflächenbehandlung und Wegfall der Abwasserbehandlung; die Bandbreite einsetzbarer Chemikalien ist größer, wenn diese nicht mehr in gelöstem beziehungsweise dispergiertem Zustand der Lot-Flussmittelsuspension zugesetzt werden müssen und somit nicht mehr mit dem Flussmittel reagieren können; Einsparung der Lotplattierung bei Aluminiumwerkstoffen; durch Einsatz von mehreren Schichten können als Grundwerkstoff der zu verlötenden Oberfläche Standard-Aluminiumwerkstoffe eingesetzt werden.

Erfindungsgemäß ist das Verfahrens dadurch gekennzeichnet, dass die in der mindestens einen weiteren Schicht enthaltenen Verbindungen während des Lötprozesses zu semikeramischen Oxidschichten umgesetzt werden. Diese Umsetzung hat sich im Rahmen der vorliegenden Erfindung als besonders vorteilhaft erwiesen.

Ein bevorzugtes Ausführungsbeispiel des Verfahrens ist dadurch gekennzeichnet, dass die Umsetzung der mindestens einen weiteren Schicht mit dem modifizierenden Zusatz bei Temperaturen bis zu 620 Grad Celsius erfolgt. Dieser Temperaturgrenzwert hat sich im Rahmen der vorliegenden Erfindung als besonders vorteilhaft erwiesen.

Weitere bevorzugte Ausführungsbeispiele des Verfahrens sind dadurch gekennzeichnet, dass die Umsetzung der mindestens einen weiteren Schicht mit dem modifizierenden Zusatz unter einer Schutzgasatmosphäre, bei Atmosphärendruck oder bei Drücken unterhalb des Atmosphärendrucks erfolgt

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfndungswesentlich sein. Es zeigen:
- Figur 1: einen einseitig beschichteten Gegenstand vor dem Löten im Schnitt;
- Figur 2: den Gegenstand aus Figur 1 nach dem Löten im Schnitt;
- Figur 3: einen beidseitig beschichteten Gegenstand vor dem Verlöten im Schnitt und

Figur 4 den Gegenstand aus Figur 3 nach dem Löten im Schnitt.

Die klassischen Verfahren zum Korrosionsschutz, wie Chromatieren, werden nach dem eigentlichen Lötvorgang am fertigen Wärmeübertrager durchgeführt. Zum Löten von Aluminium und/oder Aluminiumlegierungen ist es erforderlich, dass die Aluminiumoxidschicht vor dem Löten zumindest teilweise entfernt wird. In der Regel erfolgt dies mit Flussmitteln. Gemäß der vorliegenden Erfindung wird über oder unter einer Flussmittelschicht mindestens eine weitere Schicht, vorzugsweise mehrere weitere Schichten, appliziert.

Der Kern der Erfindung beruht auf der Umsetzung der über oder unter der Flussmittelschicht applizierten Schichten während des Lötprozesses bei Temperaturen bis 620 Grad Celsius unter Schutzgasatmosphäre und/oder bei Atmosphärendruck oder Drücken unterhalb des Atmosphärendrucks. Je nach Zusammensetzung des Aluminiumgrundwerkstoffs kann die Flussmittelschicht elementares Silizium oder Siliziumverbindungen enthalten.

Eine gemäß der vorliegenden Erfindung beschichtete Aluminiumoberfläche hat die folgenden Eigenschaften: Ausbildung dichter korrisionsschützender Oberflächenschichten während des Abkühlungsprozesses; gezielte Einstellung hydrophiler Eigenschaften; Erzeugung geruchsvermindernder Schichten; Korrosionsschutz durch die gezielte Einstellung der Korrosionspotentiale zwischen den einzelnen Schichten und/oder der Beschichtung und dem Grundwerkstoff und/oder zwischen den einzelnen Wärmetauscherkomponenten, zum Beispiel Scheibe-Wellrippe, über die Erzeugung von Diffusionsschichten.

Dabei kann der Aluminiumgrundwerkstoff/die Aluminiumlegierung in folgender Form eingesetzt werden: Einsatz von lotplattierten Halbzeugen; Einsatz von Halbzeugen ohne Lotplattierung, wobei das Lot während des Lötprozesses aus elementarem Silizium gebildet wird; das elementare Silizium ist in einer der applizierten Schichten enthalten; bei hohen Temperaturen diffundiert das Silizium in den Grundwerkstoffen und bildet das Lot aus; Einsatz von Halbzeugen ohne Lotplattierung, wobei das Lot während des Lötprozesses durch Reduktion einer siliziumhaltigen Verbindung auf der Aluminium-/Aluminiumlegierungs-Oberfläche gebildet wird; die siliziumhaltige Verbindung ist in einer der applizierten Schichten enthalten; bei hohen Temperaturen diffundiert das durch Reduktion entstandene Silizium in den Grundwerkstoffen und bildet das Lot aus.

Da die erfindungsgemäße Beschichtung luft- und/oder kühlmittel-/kältemittelseitig an einem Wärmetauscher erfolgen kann, kann über das erfindungsgemäße Verfahren ein Korrosionsschutz luft- und kühl- beziehungsweise kältemittelseitig erreicht werden.

Das Aufbringen der Flussmittelschicht erfolgt vorzugsweise durch Spritzen von Wärmetauschereinzelkomponenten mit Flussmitteldispersionen. Eine weitere Möglichkeit der Flussmittelauftragung ist das Coilcoating, bei dem das Flussmittel bereits vor der Weiterverarbeitung des Aluminiumbandmaterials zu Wärmeübertragerkomponenten auf das Bandmaterial aufgebracht wird.

Die Applikation der weiteren Schichten auf Untergründen, die aus Aluminium und/oder Aluminiumlegierungen, lotplattiert und/oder unplattiert bestehen, ist durch Anbringen weiterer Applikationsvorrichtungen in den bestehenden Prozess integrierbar. Bei Bedarf kann eine Zwischentrocknung der bereits aufgetragenen Schicht vor dem nächsten Applikationsschritt erfolgen.

Bei der Applikation von Flussmitteldispersionen auf Wärmeübertragerkomponenten und/oder beim Coilcoating-Verfahren werden weitere Beschichtungsvorrichtungen in den bestehenden Prozess integriert. Die Applikation des Flussmittels und der zusätzlichen Schichten kann über alle verfügbaren Verfahren erfolgen, wie zum Beispiel Spritzen, Aufwalzen, Tauchen, Aufrakeln, Bedampfen.

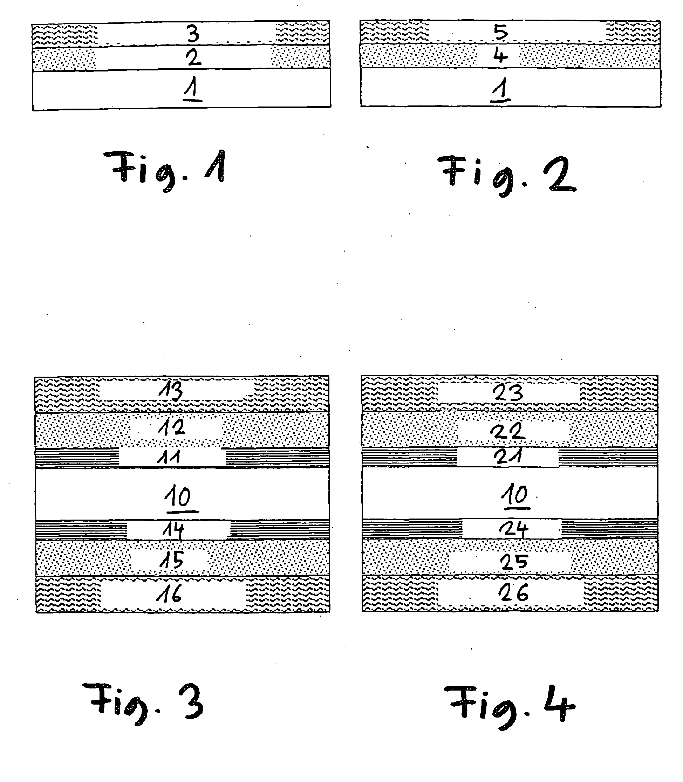

In Figur 1 ist ein Teil eines Wärmeübertragers im Schnitt dargestellt. Das Wärmeübertragerteil ist aus einem Grundwerkstoff 1 gebildet. Bei dem Grundwerkstoff 1 handelt es sich um Aluminium. Der Grundwerkstoff 1 ist einseitig mit einem Flussmittel 2 beschichtet, das Siliziumpartikel aufweist. Auf die Flussmittelschicht 2 ist eine weitere Schicht 3 aufgebracht, die metallorganische Verbindungen umfasst. Das in Figur 1 gezeigte Wärmeübertragerteil, das auch als Wärmetauscherteil bezeichnet wird, wird beim Löten Temperaturen bis über 600 Grad Celsius ausgesetzt.

In Figur 2 ist der Zustand nach dem Löten dargestellt. Beim Löten wurde die Flussmittelschicht (2 in Figur 1) in eine Lotschicht 4 umgesetzt. Die weitere Schicht (3 in Figur 1) wurde beim Löten in eine weitere Schicht 5 umgesetzt, die eine Mischverbindung mit Flussmittel enthält.

In Figur 3 ist ein beidseitig beschichtetes Wärmetauscherteil im Schnitt dargestellt. Das Wärmetauscherteil umfasst einen Grundwerkstoff 10 aus einer Aluminiumlegierung. Auf die Oberseite des Grundwerkstoffs 10 sind drei Schichten 11, 12, 13 aufgebracht. Bei der Schicht 11 handelt es sich um eine Lotplattierung. Die Schicht 12 umfasst Flussmittel. Die Schicht 13 umfasst ein Sol mit Zirkondioxid-Nanopartikeln. Auf die Unterseite des Grundwerkstoffs 10 sind drei Schichten 14, 15, 16 aufgebracht, die den Schichten 11, 12, 13 entsprechen. In Figur 3 ist der Zustand vor dem Löten dargestellt.

In Figur 4 ist der Zustand nach dem Löten dargestellt. Die Schichten (11 und 14 in Figur 3) mit der Lotplattierung wurden beim Löten in Lotschichten 21, 24 umgesetzt. Die Flussmittelschichten (12 und 15 in Figur 3) wurden beim Löten in Flussmittelphasenschichten 22, 25 umgesetzt. Die Solschichten (13 und 16 in Figur 3) wurden beim Löten in semikeramische Phasenschichten 23 und 26 umgesetzt.

## Patentansprüche

1. Gegenstand, insbesondere Wärmetauscher, mit einer zu verlötenden Oberfläche mit einer Flussmittelschicht (2;11,14), **dadurch gekennzeichnet, dass** die zu verlötende Oberfläche zusätzlich zu der Flussmittelschicht (2; 11, 14) mindestens eine weitere Schicht (3;13,16) aufweist, die einen die zu verlötende Oberfläche modifizierenden Zusatz enthält, der beim Verlöten der zu verlötenden Oberfläche umgesetzt wird, um die Oberfläche zu modifizieren, wobei die mindestens eine weitere Schicht Metallsalze enthält.

2. Gegenstand, insbesondere Wärmetauscher, mit einer zu verlötenden Oberfläche mit einer Flussmittelschicht (2;12,15) nach Anspruch 1, **dadurch gekennzeichnet, dass** die Flussmittelschicht (2:12,15) als Bindemittel mindestens eine metallorganische Verbindung enthält, die beim Verlöten der zu verlötenden Oberfläche umgesetzt wird, um die Oberfläche zu modifizieren.

3. Gegenstand nach einem der vorhergehenden Ansprüche, **dadurch gekennzeichnet, dass** die Flussmittelschicht (2) elementares Silizium oder Siliziumverbindungen enthält.

4. Gegenstand nach einem der vorhergehenden Ansprüche, **dadurch gekennzeichnet, dass** die zu verlötende Oberfläche eine Lotschicht (11,14) aufweist.

5. Gegenstand nach einem der vorhergehenden Ansprüche, **dadurch gekennzeichnet, dass** die mindestens eine weitere Schicht elementares Silizium oder Siliziumverbindungen enthält.

6. Gegenstand nach einem der vorhergehenden Ansprüche, **dadurch gekennzeichnet, dass** die Flussmittelschicht zwischen dem Grundwerkstoff des Gegenstandes und der mindestens einen weiteren Schicht angeordnet ist.

7. Gegenstand nach einem der vorhergehenden Ansprüche, **dadurch gekennzeichnet, dass** die mindestens eine weitere Schicht zwischen dem Grundwerkstoff des Gegenstandes und der Flussmittelschicht angeordnet ist.

8. Gegenstand nach einem der vorhergehenden Ansprüche, **dadurch gekennzeichnet, dass** die mindestens eine weitere Schicht Silikonharze enthält.

9. Gegenstand nach Anspruch 1, **dadurch gekennzeichnet, dass** die mindestens eine weitere Schicht Metallsalze der Elemente der Nebengruppen III-VI des Periodensystems enthält.

10. Gegenstand nach Anspruch 1, **dadurch gekennzeichnet, dass** die mindestens eine weitere Schicht Metallsalze der Elemente der Hauptgruppe II des Periodensystems der Elemente enthält.

11. Gegenstand nach einem der vorhergehenden Ansprüche, **dadurch gekennzeichnet, dass** die mindestens eine weitere Schicht metallorganische Verbindungen enthält.

12. Gegenstand nach Anspruch 11, **dadurch gekennzeichnet, dass** die mindestens eine weitere Schicht metallorganische Verbindungen auf Titanium-/Zirkonium- und/oder Siliziumbasis enthält.

13. Gegenstand nach einem der vorhergehenden Ansprüche, **dadurch gekennzeichnet, dass** die mindestens eine weitere Schicht Nanopartikel enthält.

14. Gegenstand nach Anspruch 13, **dadurch gekennzeichnet, dass** die Nanopartikel Oxide, Oxidhydrate, Nitride und/oder Carbide umfassen.

15. Gegenstand nach Anspruch 14 **dadurch gekennzeichnet, dass** die Nanopartikel Oxide, Oxidhydrate, Nitride und/oder Carbide von Hauptgruppenelementen des Periodensystems der Elemente, wie zum Beispiel Aluminium, Silizium, Indium, Bor und/oder Übergangsmetalle vorzugsweise der IV und V Nebengruppe und/oder Cer und/oder Zink und/oder metallische Nanopartikel, zum Beispiel aus Silizium, Aluminium, Zirkon, Titan, und/oder beschichtete Nanopartikel und/oder aufgepfropfte Nanopartikel vorgenannter Stoffe oder Verbindungen, umfassen.

16. Gegenstand nach einem der Ansprüche 13 bis 15, **dadurch gekennzeichnet, dass** die Nanopartikel eine Größe zwischen 1 und 1000 nm aufweisen.

17. Gegenstand nach einem der vorhergehenden Ansprüche, **dadurch gekennzeichnet, dass** die mindestens eine weitere Schicht Sol enthält.

18. Gegenstand nach Anspruch 17, **dadurch gekennzeichnet, dass** das Sol beziehungsweise die Sole Nanopartikel und/oder Metallsalze enthält beziehungsweise enthalten.

19. Gegenstand nach einem der vorhergehenden Ansprüche, **dadurch gekennzeichnet, dass** die zu verlötende Oberfläche als Grundwerkstoff Aluminium oder mindestens eine Aluminiumlegierung enthält.

20. Verfahren zum Herstellen eines Gegenstandes mit einer verlöteten Oberfläche, **dadurch gekennzeichnet, dass** ein Gegenstand gemäß einem der vorhergehenden Ansprüche bereitgestellt und die zu verlötende Oberfläche des Gegenstandes in einem Lötprozess gelötet wird, wobei die mindestens eine weitere Schicht mit dem modifizierenden Zusatz während des Lötprozesses umgesetzt wird.

21. Verfahren nach Anspruch 20, **dadurch gekennzeichnet, dass** die in der mindestens einen weiteren Schicht enthaltenen Verbindungen während des Lötprozesses zu einer teilweise keramischen Oxidschicht umgesetzt werden.

22. Verfahren nach Anspruch 20 oder 21, **dadurch gekennzeichnet, dass** die Umsetzung der mindestens einen weiteren Schicht mit dem modifizierenden Zusatz bei Temperaturen bis zu 620 Grad Celsius erfolgt.

23. Verfahren nach einem der Ansprüche 20 bis 22, **dadurch gekennzeichnet, dass** die Umsetzung der mindestens einen weiteren Schicht mit dem modifizierenden Zusatz in einer Schutzgasatmosphäre erfolgt.

24. Verfahren nach einem der Ansprüche 20 bis 23, **dadurch gekennzeichnet, dass** die Umsetzung der mindestens einen weiteren Schicht mit dem modifizierenden Zusatz bei Atmosphärendruck erfolgt.

25. Verfahren nach einem der Ansprüche 20 bis 23, **dadurch gekennzeichnet, dass** die Umsetzung der mindestens einen weiteren Schicht mit dem modifizierenden Zusatz bei Drücken unterhalb des Atmosphärendrucks erfolgt.

## Claims

1. An object, in particular a heat exchangers comprising a surface to be soldered having a layer of flux (2; 11, 14), **characterised in that** the surface to be soldered, in addition to the layer of flux (2; 11, 14), has at least one further layer (3; 13, 16), which contains an addictive that modifies the surface to be soldered and that is reacted during soldering of the surface to be soldered in order to modify the surface, wherein the at least one further layer contains metal salts.

2. The object, in particular a heat exchanger, comprising a surface to be soldered having a layer of flux (2; 12, 15) according to claim 1, **characterised in that** the layer of flux (2; 12, 15) contains at least one organometallic compound as blinder, which is reacted during soldering of the surface to be soldered in order to modify the surface.

3. The object according to one of the preceding claims, **characterised in that** the layer of flux (2) contains elemental silicon or silicon compounds.

4. The object according to one of the preceding claims, **characterised in that** the surface to be soldered has a layer of solder (11, 14).

5. The object according to one of the preceding claims, **characterised in that** the at least one further layer contains elemental silicon or silicon compounds.

6. The object according to one of the preceding claims, **characterised in that** the layer of flux is arranged between the substrate material of the object and the at least one further layer.

7. The object according to one of the preceding claims, **characterised in that** the at least one further layer is arranged between the substrate material of the object and the layer of flux.

8. The object according to one of the preceding claims, **characterised in that** the at least one further layer contains silicone resins.

9. The object according to claim 1, **characterised in that** the at least one further layer contains metal salts of the elements from transition groups III-VI of the Periodic System.

10. The object according to claim 1, **characterised in that** the at least one further layer contains metal salts of the elements from main group II of the Periodic System of the Elements.

11. The object according to one of the preceding claims, **characterised in that** the at least one further layer contains organometallic compounds.

12. The object according to claim is **characterised in that** the at least one further layer contains organometallic compounds based on titanium/zirconium and/or silicon.

13. The object according to one of the preceding claims, **characterised in that** the at least one further layer contains nanoparticles.

14. The object according to claim 13, **characterised in that** the nanoparticles comprise oxides, oxide hydrates, nitrides and/or carbides.

15. The object according to claim 14, **characterised in that** the nanoparticles comprise oxides, oxide hydrates, nitrides and/or carbides of main group elements of the Periodic System of the Elements, such as aluminium, silicon, indium, boron and/or transition metals preferably from transition group IV and V and/or cerium and/or zinc and/or metal nanoparticles, for example composed of silicon, aluminium, zirconium, titanium, and/or coated nanoparticles and/or grafted nanoparticles of the abovementioned substances or compounds.

16. The object according to one of claims 13 to 15, **characterised in that** the nanoparticles have a size of between 1 and 1000 nm.

17. The object according to one of the preceding claims, **characterised in that** the at least one further layer contains sol.

18. The object according to claim 17, **characterised in that** the sol or sols contain(s) nanoparticles and/or metal salts.

19. The object according to one of the preceding claims, **characterised in that** the surface to be soldered contains aluminium or at least one aluminium alloy as substrate material.

20. A method for producing an object comprising a surface to be soldered, **characterised in that** an object according to one of the preceding claims is provided and the surface to be soldered of the object is soldered in a soldering process, wherein the at least one further layer is reacted with the modifying additive during the soldering process.

21. The method according to claim 20, **characterised in that** the compounds contained in the at least one further layer are reacted during the soldering process to form a partly ceramic oxide layer.

22. The method according to claim 20 or 21, **characterised in that** the at least one further layer is reacted with the modifying additive at temperatures up to 620 degrees Celsius.

23. The method according to one of claims 20 to 22, **characterised in that** the at least one further layer comprising the modifying addictive is reacted in a shielding gas atmosphere.

24. The method according to one of claims 20 to 23, **characterised in that** the at least one further layer comprising the modifying additive is reacted at atmospheric pressure.

25. The method according to one of claims 20 to 23, **characterised in that** the at least one further layer comprising the modifying addictive is reacted at pressures below atmospheric pressure.

## Revendications

1. Composant, en particulier échangeur de chaleur, comportant une surface à braser avec une couche de fondant (2 ; 11, 14),
**caractérisé en ce que** la surface à braser, en plus de la couche de fondant (2 ; 11, 14), présente au moins une autre couche (3 ; 13, 16) qui contient un additif modifiant la surface à braser, lequel additif, au cours du brasage de la surface à braser, est transformé pour modifier la surface, l'autre couche au moins au nombre de un contenant des sels métalliques,

2. Composant, en particulier échangeur de chaleur, comportant une surface à braser avec une couche de fondant (2 ; 12, 15) selon la revendication 1, **caractérisé en ce que** la couche de fondant (2 ; 12, 15) contient, comme liant, au moins un composé organométallique qui, au cours du brasage de la surface à braser, est transformé pour modifier la surface.

3. Composant selon l'une ou l'autre des revendications précédentes, **caractérisé en ce que** la couche de fondant (2) contient du silicium élémentaire ou des composés de silicium.

4. Composant selon l'une quelconque des revendications précédentes, **caractérisé en ce que** la surface à braser présente une couche de brasure (11, 14).

5. Composant selon l'une quelconque des revendications précédentes, **caractérisé en ce que** l'autre couche au moins au nombre de un contient du silicium élémentaire ou des composés de silicium.

6. Composant selon l'une quelconque des revendications précédentes, **caractérisé en ce que** la couche de fondant est disposée entre le matériau de base du composant et l'autre couche au moins au nombre de un.

7. Composant selon l'une quelconque des revendications précédentes, **caractérisé en ce que** l'autre couche au moins au nombre de un est disposée entre le matériau de base du composant et la couche de fondant.

8. Composant selon l'une quelconque des revendications précédentes, **caractérisé en ce que** l'autre couche au moins au nombre de un contient des résines de silicones.

9. Composant selon la revendication 1, **caractérisé en ce que** l'autre couche au moins au nombre de un contient des sels métalliques des éléments des sous-groupes III - VI de la classification périodique des éléments.

10. Composant selon la revendication 1, **caractérisé en ce que** l'autre couche au moins au nombre de un contient des sels métalliques des éléments du groupe principal II de la classification périodique des éléments.

11. Composant selon l'une quelconque des revendications précédentes, **caractérisé en ce que** l'autre couche au moins au nombre de un contient des composés organométalliques.

12. Composant selon la revendication 11, **caractérisé en ce que** l'autre couche au moins au nombre de un contient des composés organométalliques sur une base de titane/de zirconium et/ou de silicium.

13. Composant selon l'une quelconque des revendications précédentes, **caractérisé en ce que** l'autre couche au moins au nombre de un contient des nanoparticules.

14. Composant selon la revendication 13, **caractérisé en ce que** les nanoparticules comprennent des oxydes, des hydrates d'oxydes, des nitrures et/ou des carbures.

15. Composant selon la revendication 14, **caractérisé en ce que** les nanoparticules comprennent des oxydes, des hydrates d'oxydes, des nitrures et/ou des carbures d'éléments de groupes principaux de la classification périodique des éléments, comme par exemple de l'aluminium, du silicium, de l'indium, du bore, et/ou des métaux transitoires de préférence des sous-groupes IV et V, et/ou du cérium et/ou du zinc et/ou des nanoparticules métalliques, par exemple de silicium, d'aluminium, de zirconium, de titane, et/ou des nanoparticules enrobées et/ou des nanoparticules greffées de matériaux ou de composés précités.

16. Composant selon l'une quelconque des revendications 13 à 15, **caractérisé en ce que** les nanoparticules présentent une dimension comprise entre 1 nm et 1000 nm.

17. Composant selon l'une quelconque des revendications précédentes, **caractérisé en ce que** l'autre couche au moins au nombre de un contient du sol.

18. Composant selon la revendication 17, **caractérisé en ce que** le sol ou les sols contient ou contiennent des nanoparticules et/ou des sels métalliques.

19. Composant selon l'une quelconque des revendications précédentes, **caractérisé en ce que** la surface à braser contient, comme matériau de base, de l'aluminium ou au moins un alliage d'aluminium.

20. Procédé de fabrication d'un composant ayant une surface brasée, **caractérisé en ce qu'**un composant conformément à l'une quelconque des revendications précédentes est réalisé, et la surface - à braser - du composant est brasée au cours d'un processus de brasage, l'autre couche au moins au nombre de un étant transformée au cours du processus de brasage, avec l'additif modificateur.

21. Procédé selon la revendication 20, **caractérisé en ce que** les composés contenus dans l'autre couche au moins au nombre de un sont transformés au cours du processus de brasage, pour former une couche d'oxyde partiellement en céramique.

22. Procédé selon la revendication 20 ou 21, **caractérisé en ce que** la transformation de l'autre couche au moins au nombre de un, avec l'additif modificateur, se produit à des températures allant jusqu'à 620 degrés Celsius.

23. Procédé selon l'une quelconque des revendications 20 à 22, **caractérisé en ce que** la transformation de l'autre couche au moins au nombre de un, avec l'additif modificateur, se produit dans une atmosphère sous gaz protecteur.

24. Procédé selon l'une quelconque des revendications 20 à 23, **caractérisé en ce que** la transformation de l'autre couche au moins au nombre de un, avec l'additif modificateur, se produit sous pression atmosphérique.

25. Procédé selon l'une quelconque des revendications 20 à 23, **caractérisé en ce que** la transformation de l'autre couche au moins au nombre de un, avec l'additif modificateur, se produit à des pressions inférieures à la pression atmosphérique.
